# EUROPEAN PATENT SPECIFICATION

(11) **EP 0 570 458 B1**
(45) Date of publication and mention of the grant of the patent: **25.09.1996**
(21) Application number: 92904648.0
(22) Date of filing: 27.01.1992
(51) Int. Cl.: C08F 2/44

(54) **PROCESS FOR REMOVING UNDESIRED SUBSTANCES IN PLASTIC MATERIALS**
VERFAHREN ZUM ENTFERNEN UNERWÜNSCHTER SUBSTANZEN AUS KUNSTSTOFFMATERIALIEN
PROCEDE PERMETTANT D'ELIMINER LES MATIERES INDESIRABLES DANS LA PRODUCTION DES MATERIAUX PLASTIQUES

(30) Priority: 07.02.1991 SE 9100383
(43) Date of publication of application: 24.11.1993
(73) Proprietor: Borealis Holding A/S, DK-2800 Lyngby (DK)
(72) Inventor: GUSTAFSSON, Bill, S-444 41 Stenungsund (SE); JOHANSSON, Solveig, S-444 00 Stenungsund (SE)
(74) Representative: Wiklund, Erik
(86) International application number: SE9200045
(87) International publication number: WO9213899

(56) References cited:
- US-A- 4 795 482
- US-A- 4 859 733
- US-A- 4 910 295
- Dialog Information Services, File 351, World Patent Index 81-91, Dialog Accession No. 007807053, DAINIPPON PRINTING KK: "Heated food package - comprises packing material e.g. polypropylene including deodorant, e.g. citric acid to prevent malodorous emissions'.
- Dialog Information Services, File 350, World Patent Index 81-91, Dialog Accession No. 002028386, LION FAT & OIL KK: "Liq. olefin polymer purifion.- by catalytic hydrogenation in a lithium hydride and addn. of an absorbent"

## Description

The present invention relates to a process for removing or eliminating undesired substances in plastic materials. The invention relates particularly to the reduction or elimination of undesired, unintentionally added substances from polyolefin type materials, by which are henceforth meant homopolymers of ethylene or propylene or copolymers of one of these hydrocarbons with another alpha olefin. The undesired substances can especially be odour/ taste-producing substances in plastic materials for fields of application where they may contact liquids or foodstuffs to be consumed by human beings or animals, or where any odour or taste may be experienced as negative for hygienic or aesthetic reasons.

In many contexts undesired, odour- and/or taste-producing substances appear owing to chemical degradation or transformation in connection with production or compounding of plastic materials. These substances can be of a highly varying chemical character. The occurrence thereof can constitute a health hazard or merely a source of irritation. Since the human being normally is most susceptible to odours and tastes, the substances need not appear in very high concentrations, but in most cases as low concentrations as one or a few ppm are sufficient to make a taste or odour evident. To date, attempts have been made to overcome or at least reduce such odour and taste problems in various ways, such as by degassing the plastic material. Such a method is not only lengthy and expensive; it also results in but a moderate improvement in respect of odour and taste, respectively.

Some specific fields will now be mentioned where the problem with undesired substances causing odour and/or taste is of particular significance.

Such a field comprises plastic pipes, more specifically plastic water pipes, where the emission of odour- and/or taste-producing substances from the plastic material to the drinking water flowing through the pipe frequently is an annoying problem which is difficult to solve. The problem grows more serious by the fact that no details of the odour/taste-producing substance(s) are known. It is believed that they consist of a variably composed mixture of different substances, such as oligomers, formed in the polymerisation, or volatile substances which have been formed by oxidisation processes in conjunction with subsequent steps of processing and which even at extremely small concentrations of 1-1000 ppm in the water give this an undesired odour and/or taste.

A second field comprises film and sheeting of plastic material, more particularly film and sheeting that is caused to contact foodstuffs or pharmaceutical preparations. Since for foodstuffs and pharmaceutical preparations extremely high requirements as regards purity are made and no foreign substances contaminating the foodstuff or pharmaceutical preparation are allowed for reasons of health and security, it is vital that plastic film and sheeting used for such products does not emit any undesired or contaminating substances. In such plastic products, there is also a particularly great risk that undesired substances are produced, such as when boiling the foodstuff in the wrapping, or when sterilising the drug packing by heat treatment or radiation.

A closely related field is represented by containers, such as bottles, of blow-moulded or moulded plastic, for packing foodstuffs, beverages or pharamceutical preparations.

A further field applies to interior fittings of plastic, e.g. panels, for use in buildings or cars. In new cars, it thus is not unusual that the odour can be very unpleasant.

In all four fields mentioned above, the possible odour which one may want to eliminate can appear especially in the compounding/processing of the plastic material and in this context constitutes a problem in the working environment.

From a general point of view, it is known to remove any undesired odour and/or taste by means of adsorbing substances, and as examples of such adsorbing substances, activated carbon, silica gel, activated aluminium oxide, diatomaceous earth and zeolites may be mentioned. An example in which a number of such additives are suggested, is Japanese Patent Specification JP 1,023,970. This publication suggests the adding of e.g. aluminium hydroxide, clay, diatomaceous earth, kaolin, talc, bentonite, activated carbon or activated carbon fibre for materials for packing foodstuffs to be heated in the packing. However, such additives have been found to be without any appreciable effect, except under special circumstances, in the case of undesired components in plastic materials of the types concerned according to the present invention since, as a rule, they lose their absorbing capacity when contacting water or water vapour.

Recently, US Patent Specification 4,795,482 has described a new type of zeolites intended for the elimination of undesired odour in certain contexts and supplied under one of the names ABSCENT or SMELLRITE. These zeolites are described to be crystalline, siliceous molecular sieves in which at least about 90, and preferably at least about 95, % of the tetrahedral oxide units of the crystal lattice are SiO₂ tetrahedra, and which have adsorption capacity for water at 25°C and 4.6 torr of less than 10 wt.-%. These zeolites have an Si/Al molar ratio of from 35 to infinity, preferably between 200 and 500, and a pore diameter of at least 5.5 Å, preferably at least 6.2 Å. It is also preferred that the sorption capacity for water vapour at 25°C and a water vapour pressure of 4.6 torr is less than 6 wt.-%. These substantially hydrophobic molecular sieves are used to remove odorous organic compounds at a temperature of from -25°C to 100°C.

It should here be added that the above-mentioned Si/Al molar ratio for these molecular sieves applies to the oxide units of the crystal lattice only. The Si/Al molar ratio of the zeolite, which has been determined by conventional wet analysis, can be considerably lower owing to contamination by aluminous pollutants formed in the so-called dealuminification reaction which in many cases is included as a step in the production of the zeolite.

The above-mentioned zeolitic molecular sieves have proved useful above all for removing undesired odour from hygienic products, such as diapers and incontinence products. Reference is here also made to EP 0,348,978.

As a further example of prior-art technique, US Patent 4,859,733 may be mentioned, according to which a zeolite is added to a polymer in order to remove trialkanolamines which are used as deactivators in the polymerisation reaction.

One more example of prior-art technique while using the same type of zeolite is US Patent 4,910,295. This patent relates to a specific process for reducing the odour of residual amounts of the comonomer ethylidene norbornene present in certain types of EPDM rubber.

According to the present invention, it has now surprisingly been found that by adding a zeolite in connection with the polymerisation of the plastic material in the reactor, it is possible to remove or eliminate undesired substances, such as odour/taste-producing substances.

It must be considered surprising that the added zeolite functions for removing the undesired substances in the invention, since one could rather expect that the zeolite would absorb other low-molecular compounds, such as the monomers present in the polymerisation reaction, or would be clogged by such compounds. However, this is not the case but, depending on the selected zeolite, this can be caused to selectively remove undesired compounds, such as substances having undesired odour/taste.

One could also expect that the zeolite would affect the polymerisation reaction in an unfavourable manner, but it has been found that by selecting a suitable zeolite, this problem can also be avoided.

According to the invention, there is thus provided a process for removing undesired substances in the production of plastic materials, characterised in that in the polymerisation of the plastic material in the reactor, 10-1000 ppm of a suitable zeolite is added.

Further characteristic features of the invention are evident from the specification below and the accompanying claims.

According to the invention, it may be suitable that the added zeolite is dehydrated, i.e. free from water. In that case, the zeolite is heat treated or dried before being supplied to the polymerisation reactor. The conditions of the heat treatment should be such that any moisture or other adsorbed substances in the zeolite are removed and a dehydrated and pure zeolite is produced. Suitable conditions for this have turned out to be heating at a temperature of 250-350° for 2-5 h, preferably 3-4 h. After the desorbing heat treatment, the zeolite should be stored under inert gas, such as nitrogen, before being supplied it to the polymerisation reactor.

An especially preferred aspect of the present invention concerns the reduction or elimination of odour/taste-producing substances. As mentioned above, attempts have previously been made to eliminate such undesired substances by treating the finished plastic material in different manners. Since, according to the present invention, the zeolite is added so as to be present during the actual polymerisation reaction and remove the substances as early as in the polymerisation, both the formation and the presence of odour/taste-producing substances are counteracted in a most effective manner. As mentioned, it must be considered surprising that the added zeolite selectively removes the undesired, odour/taste-producing substances, without sorbing monomers and/or reaction products in the polymerisation reactor. Further, as far as can be judged, the efficiency of the invention for removing odour/taste-producing substances seems to be unexpectedly higher than in previous processes since, according to the invention, very small amounts of added zeolite in the order of parts per million (ppm) calculated on the weight of polymer formed are sufficient to prevent the presence of odour/ taste-producing substances. Generally, 10-1000 ppm, preferably 25-800 ppm, most advantageously 50-500 ppm of zeolite is added according to the invention, calculated on the weight of polymer formed.

According to the invention it has been found that not all zeolites are active to remove substances having an undesired odour or taste. Thus, it has been established that the zeolite should be substantially hydrophobic (oleophilic) to be effective in the elimination of odour and taste. A measure of the hydrophobic properties is the water sorption of the zeolite, and this should suitably be less than 10 wt.-%, preferably less than 6 wt.-%, at 25°C and 4.6 torr. The Si/Al molar ratio of the zeolite in the oxide units of its crystal lattice seems to affect the hydrophobic properties and should exceed 35 and preferably be between 200 and 500. The pore diameter of the zeolite, which according to the molecular size determines which compounds can be caught by the zeolite, should be at least 5.5 and preferably at least 6.2 Å.

The zeolite, which generally is in the form of a powder, should have such a small particle size that it does not detrimentally affect the appearance of the plastic material or the other properties thereof. Thus, the zeolite should have an average particle size not exceeding about 10 µm, such as 0.1-7 µm, preferably not exceeding about 5 µm.

In the above-mentioned, especially preferred aspect of the invention which concerns the reduction or elimination of undesired, odour- and/or taste-producing substances, the zeolite used according to the invention can advantageously be a zeolite according to the above US Patent 4,795,482.

The method of adding the zeolite to the polymerisation reactor is not critical, but it can be added either together with the polymerisation catalyst or in the form of a separate flow of material. Depending on the type of polymer to be produced, the composition of the catalyst can differ, for example a so-celled Ziegler catalyst or a so-called chromium oxide catalyst. It is preferred to carry out the invention in polymerisation while using a chromium oxide catalyst, for example of the type described in US Patent Specification 3,324,101.

For further elucidation of the invention. Example follows below.

### EXAMPLE

For the purpose of determining the effect of the invention for removing undesired odour/taste-producing substances, different materials were tested while using a taste panel. The testing materials consisted of polyethylene produced by polymerisation of ethylene in a polymerisation reactor. In the polymerisation, use was made of a chromium catalyst of the type described in US Patent Specification 3,324,101. When producing a reference sample, the polymerisation was performed without adding a zeolite, whereas in the tests according to the invention, varying amounts of zeolite were added at the same time as the catalyst. The zeolite used was a hydrophobic zeolite of the type described in US Patent Specification 4,795,482 and marketed under the trade name SMELLRITE. Before the zeolite was added to the polymerisation reactor, it was heat treated at about 300°C for 4 h and then protected by nitrogen gas, before being mixed with the catalyst and added to the reactor. After the polymerisation, the polymer material was pelletised in connection with the extrusion, and from each test, about 32 g of pellets was taken out and stirred for 4 h at a temperature of 30 ± 1°C by a magnetic agitating means in a flask fitted with a groundin plug and containing 1000 ml of pure distilled water. Five sub-samples were then prepared from each sample by dilution according to Table 1 below.

**TABLE 1**

| Sub-sample No. | Sample water ml | Dilution water ml | Taste/odour level degree |
|---|---|---|---|
| 1 | 200 | 0 | 1 |
| 2 | 130 | 70 | 1.5 |
| 3 | 100 | 100 | 2 |
| 4 | 50 | 150 | 4 |
| 5 | 25 | 175 | 8 |

The level of taste and odour is here defined as follows: (a + b)/a wherein a is the amount of sample water in the sub-sample in which odour or taste is barely detectable, while b is the amount of dilution water in the same sub-sample. The lower the value of the taste and odour level the better the result. A value of 1.5 and below is acceptable. Seven trained taste testers are allowed to estimate each sample and determine their personal taste level. The average value of the seven people is considered to produce an objective estimation thereof. The testing is blind, i.e. the taste panel cannot distinguish the samples.

A total of 3 samples were examined according to this procedure. The results are shown in Table 2.

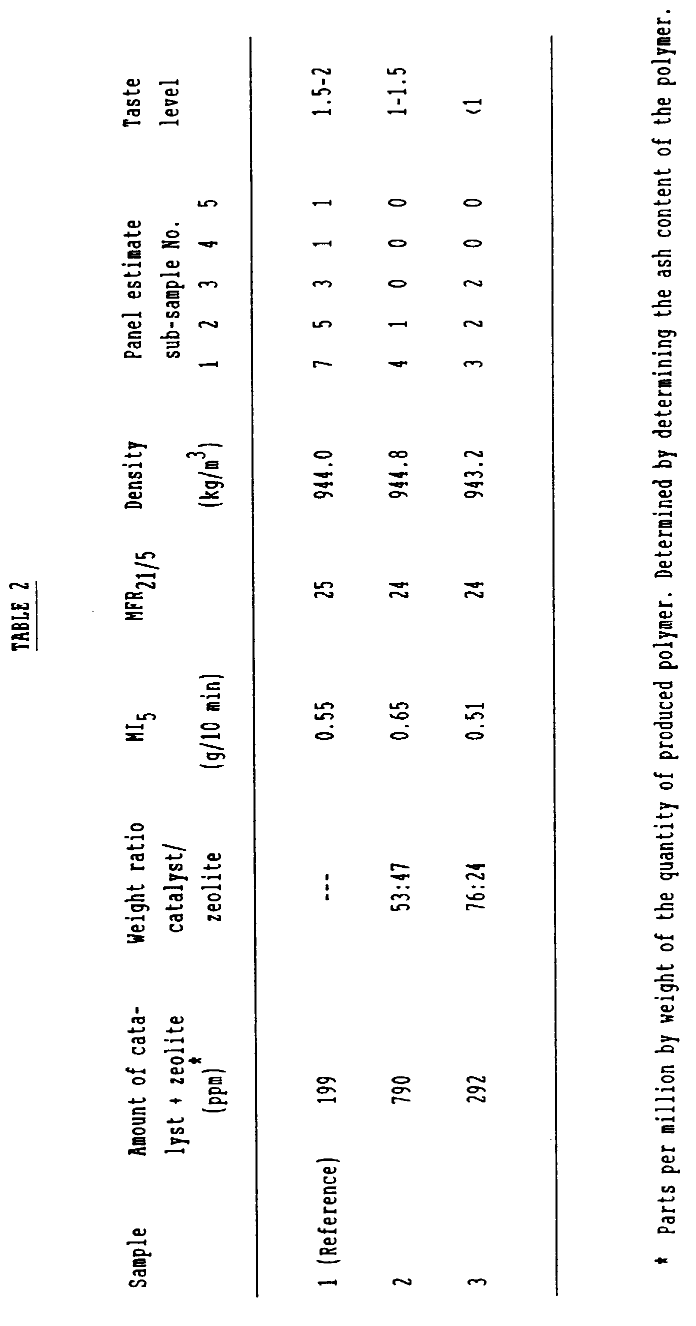

In Table 2, MI₅ indicates the melt index of the produced polymer, determined according to ISO-R-292 at a constant load of 5 kg and a temperature of 190°C. MFR stands for "melt flow ratio", i.e. a ratio of different melt indexes. MFR_{21/5} concerns the ratio of MI₂₁ to MI₅.

As is evident from Table 2, the added zeolite is effective for removing odour/taste-producing substances. It is also evident that the properties of the produced polymer are not notably affected by the added zeolite, while the catalyst activity can decrease slightly as the amount of added zeolite increases. This appears from the fact that the values of "amount of catalyst + zeolite" increase, thus indicating that the formed amount of polymer per unit of weight of catalyst decreases, i.e. the activity of the catalyst decreases. An optimal amount of zeolite seems to be about 1/4 of the amount of catalyst + zeolite.

## Claims

1. Process for reducing undesired substances in the production of plastic materials, **characterised** in that in the polymerisation of the plastic material in the reactor, 10-1000 ppm of zeolite is added thereto so as to be present during the polymerisation reaction, said zeolite being a substantially hydrophobic aluminium silicate molecular sieve with a pore diameter of at least about 5.5 Å, an Si/Al molar ratio in the crystal lattice of at least 35, and a sorption capacity for water at 25°C and 4.6 torr of less than 10 wt.-%.

2. Process as claimed in claim 1, **characterised** in that 25-800 ppm of zeolite is added to the reactor.

3. Process as claimed in claim 2, **characterised** in that 50-500 ppm of zeolite is added to the reactor.

4. Process as claimed in any one of the preceding claims, **characterised** in that the amount of zeolite is 25-75 wt.-% of the total amount of zeolite and catalyst.

5. Process as claimed in any one of the preceding claims, **characterised** in that the zeolite has an average particle size not exceeding 5 µm.

6. Process as claimed in any one of the preceding claims, **characterised** in that the molecular sieve has an Si/Al molar ratio in the crystal lattice of between 200 and 500, and that it has a sorption capacity for water at 25°C and 4.6 torr of less than 6 wt.-%.

7. Process as claimed in any one of the preceding claims, **characterised** in that the zeolite is dehydrated by drying at 250-350°C for 2-5 h, before being added to the reactor.

8. Process as claimed in any one of the preceding claims, **characterised** in that the zeolite is stored under an inert gas before being added to the reactor.

## Patentansprüche

1. Verfahren zum Reduzieren unerwünschter Substanzen bei der Herstellung von Kunststoffmaterialien, dadurch gekennzeichnet, daß bei der Polymerisation des Kunststoffmaterials in dem Reaktor 10-1000 ppm an Zeolit dazugegeben werden, um während der Polymerisationsreaktion anwesend zu sein, wobei das genannte Zeolit ein im wesentlichen hydrophobes Aluminiumsilikat-Molekularsieb ist mit einem Porendurchmesser von wenigstens ca. 5,5 Å, einem molaren Verhältnis Si/Al im Kristallgitter von wenigstens 35, und einer Sorptionskapazität für Wasser bei 25°C und 4,6 Torr von weniger als 10 Gew.%.

2. Verfahren nach Anspruch 1, dadurch gekennzeichnet, daß 25-800 ppm an Zeolit in den Reaktor zugegeben werden.

3. Verfahren nach Anspruch 2, dadurch gekennzeichnet, daß 50-500 ppm an Zeolit in den Reaktor zugegeben werden.

4. Verfahren nach einem der vorangehenden Ansprüche, dadurch gekennzeichnet, daß die Menge an Zeolit 25-75 Gew.% der Gesamtmenge an Zeolit und Katalysator beträgt.

5. Verfahren nach einem der vorangehenden Ansprüche, dadurch gekennzeichnet, daß das Zeolit eine 5 um nicht übersteigende durchschnittliche Partikelgröße aufweist.

6. Verfahren nach einem der vorangehenden Ansprüche, dadurch gekennzeichnet, daß das Molekularsieb ein molares Verhältnis Si/Al in dem Kristallgitter zwischen 200 und 500 aufweist, und daß es eine Sorptionskapazität für Wasser bei 25°C und 4,6 Torr von weniger als 6 Gew.% besitzt.

7. Verfahren nach einem der vorangehenden Ansprüche, dadurch gekennzeichnet, daß das Zeolit durch Trocknen bei 250-350°C für 2-5 Stunden vor der Zugabe in den Reaktor dehydriert ist.

8. Verfahren nach einem der vorangehenden Ansprüche, dadurch gekennzeichnet, daß das Zeolit unter Intertgas vor der Zugabe zu dem Reaktor gelagert ist.

## Revendications

1. Procédé de réduction de substances indésirables dans la production de matériaux plastiques, caractérisé en ce qu'on ajoute dans la polymérisation du matériau plastique dans le réacteur 10-1000 ppm de zéolyte à celui-ci afin qu'elle soit présente pendant la réaction de polymérisation, ladite zéolite étant un tamis moléculaire de silicate d'aluminium pratiquement hydrophobe présentant un diamètre de pores d'au moins environ 5,5 Å, un rapport molaire Si/Al dans le réseau cristallin d'au moins 35, et une capacité desorption pour l'eau à 25°C et à 4,6 torr inférieure à 10 % en poids.

2. Procédé selon la revendication 1, caractérisé en ce qu'on ajoute 25-800 ppm de zéolite au réacteur.

3. Procédé selon la revendication 2, caractérisé en ce qu'on ajoute 50-500 ppm de zéolite au réacteur.

4. Procédé selon l'une quelconque des revendications précédentes, caractérisé en ce que la quantité de zéolite est de 25-75 % en poids de la quantité totale de zéolite et de catalyseur.

5. Procédé selon l'une quelconque des revendications précédentes, caractérisé en ce que la zéolite présente une taille moyenne de particules ne dépassant pas 5 µm.

6. Procédé selon l'une quelconque des revendications précédentes, caractérisé en ce que le tamis moléculaire présente un rapport molaire Si/Al dans le réseau cristallin compris entre 200 et 500, et en ce qu'il présente une capacité desorption pour l'eau à 25°C et à 4,6 torr inférieure à 6 % en poids.

7. Procédé selon l'une quelconque des revendications précédentes, caractérisé en ce que la zéolite est déshydratée par séchage à 250-350°C pendant 2-5 h avant d'être ajoutée au réacteur.

8. Procédé selon l'une quelconque des revendications précédentes, caractérisé en ce que la zéolite est stockée sous un gaz inerte avant d'être ajoutée au réacteur.
